(19) **Europäisches Patentamt / European Patent Office / Office européen des brevets**

(11) **EP 4 575 912 A1**

(12) # EUROPEAN PATENT APPLICATION

(43) Date of publication:
**25.06.2025 Bulletin 2025/26**

(21) Application number: **24218912.4**

(22) Date of filing: **11.12.2024**

(51) International Patent Classification (IPC):
**G06N 3/092** (2023.01) **G06N 3/096** (2023.01)
**G06N 3/0455** (2023.01) **G06N 3/0985** (2023.01)
**G06F 16/9032** (2019.01)

(52) Cooperative Patent Classification (CPC):
**G06N 3/096; G06F 16/90332; G06N 3/0455;**
**G06N 3/092; G06N 3/0985**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **20.12.2023 IN 202321087109**

(71) Applicant: **Tata Consultancy Services Limited**
**Maharashtra (IN)**

(72) Inventors:
• **SIVAKUMAR, NARENDRAN**
  London, SW1X 7HS (GB)
• **VISWANATHAN, SANKARANARAYANAN**
  600113 Chennai, Tamil Nadu (IN)
• **KANNAN, RADHIKA**
  600113 Chennai, Tamil Nadu (IN)
• **RAMASAMY VENKADA, SUBRAMANIAN**
  560066 Bangalore, Karnataka (IN)

(74) Representative: **Goddar, Heinz J.**
**Boehmert & Boehmert**
**Anwaltspartnerschaft mbB**
**Pettenkoferstrasse 22**
**80336 München (DE)**

(54) **SYSTEMS AND METHODS FOR OPTIMIZING PERFORMANCE OF ARTIFICIAL INTELLIGENCE (AI) AGENTS**

(57) Black-Box Optimization (BBO) approaches have found optimal policies for systems that interact with environments with no analytical representation and that are complex in nature. However, such approaches are overlooked in AI tasks related aspects. Present disclosure provides systems and methods for optimizing the performance of artificial intelligence (AI) agents. The AI agents are generated based on NLP data and tasks received as inputs to the system. The AI agents are then evaluated and selected based on associated aggregated interpretability score. At least a subset of AI agents is mapped to corresponding tasks based on the associated aggregated interpretability score and by meta-learning techniques. The AI agents deployed to perform the mapped tasks are then optimized based on a dynamic prediction of an effectiveness of one or more associated metric weightings, thus obtaining an optimized chain of AI agents.

receiving, via one or more hardware processors, natural language processing (NLP) data and one or more structured tasks to be performed — 202

generating, by using a Dynamic NLP tuner via the one or more hardware processors, one or more task specific artificial intelligence (AI) agents based on a nature of the NLP data, and an associated context of the one or more structured tasks — 204

evaluating and selecting, by using a model repository analytics engine (MRAE) via the one or more hardware processors, at least a subset of the one or more task specific AI agents based on a performance trend and suitability of the one or more structured tasks, wherein the evaluation and selection of at least the subset of the one or more task specific AI agents is based on an associated aggregated interpretability score — 206

mapping, by using an adaptive model matching system (AMMS) via the one or more hardware processors, at least the subset of the one or more task specific AI agents to a corresponding structured task amongst the one or more structured tasks based on the associated aggregated interpretability score and by applying one or more meta-learning techniques to each of the one or more selected AI task specific AI agents, to obtain a chain of task specific mapped AI agents — 208

optimizing, by using a performance metrics optimizer (PMO) via the one or more hardware processors, performance of at least the subset of the one or more task specific mapped AI agents performing the corresponding structured task based on a dynamic prediction of an effectiveness of one or more associated metric weightings, to obtain an optimized chain of task specific mapped AI agents — 210

**FIG. 3**

EP 4 575 912 A1

**Description**

CROSS-REFERENCE TO RELATED APPLICATIONS AND PRIORITY

The present application claims priority to Indian application no. 202321087109, filed on December 20, 2023.

TECHNICAL FIELD

The disclosure herein generally relates to optimization techniques for artificial intelligence (AI) agents, and, more particularly, to systems and methods for optimizing performance of artificial intelligence (AI) agents.

BACKGROUND

Black-Box Optimization (BBO) approaches have found optimal policies for systems that interact with environments with no analytical representation and that are complex in nature. Recently, applications of these are seen in Artificial Intelligence (AI) domains. However, such approaches lack accuracy in solving problems. Also, these are overlooked in AI tasks related aspects. It is very well known that optimization problems are prevalent in artificial intelligence domains. It is imperative that AI agents performing tasks are optimized and need special attention in solving such problems.

SUMMARY

Embodiments of the present disclosure present technological improvements as solutions to one or more of the above-mentioned technical problems recognized by the inventors in conventional systems.

For example, in one aspect, there is provided a processor implemented method for optimizing performance of artificial intelligence (AI) agents. The method comprises receiving, via one or more hardware processors, natural language processing (NLP) data and one or more structured tasks to be performed; generating, by using a Dynamic NLP tuner via the one or more hardware processors, one or more task specific artificial intelligence (AI) agents based on a nature of the NLP data, and an associated context of the one or more structured tasks; evaluating and selecting, by using a model repository analytics engine (MRAE) via the one or more hardware processors, at least a subset of the one or more task specific AI agents based on a performance trend and suitability of the one or more structured tasks, wherein the evaluation and selection of at least the subset of the one or more task specific AI agents is based on an associated aggregated interpretability score; mapping, by using an adaptive model matching system (AMMS) via the one or more hardware processors, at least the subset of the one or more task specific AI agents to a corresponding structured task amongst the one or more structured tasks based on the associated aggregated interpretability score and by applying one or more meta-learning techniques to each of the one or more selected AI task specific AI agents, to obtain a chain of task specific mapped AI agents; and optimizing, by using a performance metrics optimizer (PMO) via the one or more hardware processors, performance of at least the subset of the one or more task specific mapped AI agents performing the corresponding structured task based on a dynamic prediction of an effectiveness of one or more associated metric weightings, to obtain an optimized chain of task specific mapped AI agents.

In an embodiment, the step of generating the one or more task specific AI agents comprises: transforming, by using an encoder of an Adaptive Context Gating Mechanism (ACGM) via the one or more hardware processors, the NLP data into an encoded contextual intermediate representation; and modulating, by the ACGM via the one or more hardware processors, the encoded contextual intermediate representation based on complexity of the one or more structured tasks to obtain the one or more task specific AI agents.

In an embodiment, the encoded contextual intermediate representation is modulated based on an adaptability layer introduced in the NLP data and an adjustment of one or more gating parameters of the ACGM.

In an embodiment, the one or more gating parameters of the ACGM are adjusted based on one or more factors comprising at least one of the nature of the NLP data, the context of the one or more tasks, and a feedback from one or more preceding outcomes.

In an embodiment, an embedding space of the encoded contextual intermediate representation is iteratively adjusted with the one or more structured tasks, by using a Dynamic Embedding Optimizer (DEO).

In an embodiment, one or more internal states of the one or more task specific AI agents are updated based on at least one of (i) performance of the one or more task specific AI agents, and (ii) feedback associated with the embedding space of the one or more task specific AI agents.

In an embodiment, the associated aggregated interpretability score is obtained by generating, by using the performance metrics optimizer, one or more performance metrics for the one or more task specific AI agents based on the corresponding structured task being performed; and obtaining the associated aggregated interpretability score for the one or more task specific AI agents based on the one or more performance metrics.

In an embodiment, the method further comprises dynamically tuning one or more performance metrics of at least the subset of the one or more task specific AI agents based on an associated complexity of the one or more structured tasks being performed.

In an embodiment, the one or more performance metrics comprise at least one of latency, throughput, and accuracy of the one or more task specific AI agents.

In another aspect, there is provided a processor implemented system for optimizing performance of artificial intelligence (AI) agents. The system comprises: a memory storing instructions; one or more communication interfaces; and one or more hardware processors coupled to the memory via the one or more communication interfaces, wherein the one or more hardware processors are configured by the instructions to: receive natural language processing (NLP) data and one or more structured tasks to be performed; generate, by using a Dynamic NLP tuner, one or more task specific artificial intelligence (AI) agents based on a nature of the NLP data, and an associated context of the one or more structured tasks; evaluate and select, by using a model repository analytics engine (MRAE), at least a subset of the one or more task specific AI agents based on a performance trend and suitability of the one or more structured tasks, wherein the evaluation and selection of at least the subset of the one or more task specific AI agents is based on an associated aggregated interpretability score; mapping, by using an adaptive model matching system (AMMS), the at least the subset of the one or more task specific AI agents to a corresponding structured task amongst the one or more structured tasks based on the associated aggregated interpretability score and by applying one or more meta-learning techniques to each of the one or more selected AI task specific AI agents, to obtain a chain of task specific mapped AI agents; and optimizing, by using a performance metrics optimizer (PMO), performance of at least the subset of the one or more task specific mapped AI agents performing the corresponding structured task based on a dynamic prediction of an effectiveness of one or more associated metric weightings, to obtain an optimized chain of task specific mapped AI agents.

In an embodiment, the one or more task specific AI agents are generated by transforming, by using an encoder of an Adaptive Context Gating Mechanism (ACGM) via the one or more hardware processors, the NLP data into an encoded contextual intermediate representation; and modulating, by the ACGM via the one or more hardware processors, the encoded contextual intermediate representation based on complexity of the one or more structured tasks to obtain the one or more task specific AI agents.

In an embodiment, the encoded contextual intermediate representation is modulated based on an adaptability layer introduced in the NLP data and an adjustment of one or more gating parameters of the ACGM.

In an embodiment, the one or more gating parameters of the ACGM are adjusted based on one or more factors comprising at least one of the nature of the NLP data, the context of the one or more tasks, and a feedback from one or more preceding outcomes.

In an embodiment, an embedding space of the encoded contextual intermediate representation is iteratively adjusted with the one or more structured tasks, by using a Dynamic Embedding Optimizer (DEO).

In an embodiment, one or more internal states of the one or more task specific AI agents are updated based on at least one of (i) performance of the one or more task specific AI agents, and (ii) feedback associated with the embedding space of the one or more task specific AI agents.

In an embodiment, the associated aggregated interpretability score is obtained by generating, by using the performance metrics optimizer, one or more performance metrics for the one or more task specific AI agents based on the corresponding structured task being performed; and obtaining the associated aggregated interpretability score for the one or more task specific AI agents based on the one or more performance metrics.

In an embodiment, the one or more hardware processors are further configured by the instructions to dynamically tune one or more performance metrics of at least the subset of the one or more task specific AI agents based on an associated complexity of the one or more structured tasks being performed.

In an embodiment, the one or more performance metrics comprise at least one of latency, throughput, and accuracy of the one or more task specific AI agents.

In yet another aspect, there are provided one or more non-transitory machine-readable information storage mediums comprising one or more instructions which when executed by one or more hardware processors cause optimizing performance of artificial intelligence (AI) agents by receiving natural language processing (NLP) data and one or more structured tasks to be performed; generating, by using a Dynamic NLP tuner, one or more task specific artificial intelligence (AI) agents based on a nature of the NLP data, and an associated context of the one or more structured tasks; evaluating and selecting, by using a model repository analytics engine (MRAE), at least a subset of the one or more task specific AI agents based on a performance trend and suitability of the one or more structured tasks, wherein the evaluation and selection of at least the subset of the one or more task specific AI agents is based on an associated aggregated interpretability score; mapping, by using an adaptive model matching system (AMMS), at least the subset of the one or more task specific AI agents to a corresponding structured task amongst the one or more structured tasks based on the associated aggregated interpretability score and by applying one or more meta-learning techniques to each of the one or more selected AI task specific AI agents, to obtain a chain of task specific mapped AI agents; and optimizing, by using a performance metrics optimizer (PMO), performance of at least the subset of the one or more task specific mapped AI agents performing the corresponding structured task based on a dynamic prediction of an effectiveness of one or more associated metric weightings, to obtain an optimized chain of task specific mapped AI agents.

In an embodiment, the one or more task specific AI agents are generated by transforming, by using an encoder of an Adaptive Context Gating Mechanism (ACGM) via the one or more hardware processors, the NLP data into an encoded contextual intermediate representation; and modulating, by the ACGM via the one or more hardware processors, the encoded contextual intermediate representation based on complexity of the one or more structured tasks to obtain the one or more task specific AI agents.

In an embodiment, the encoded contextual intermediate representation is modulated based on an adaptability layer introduced in the NLP data and an adjustment of one or more gating parameters of the ACGM.

In an embodiment, the one or more gating parameters of the ACGM are adjusted based on one or more factors comprising at least one of the nature of the NLP data, the context of the one or more tasks, and a feedback from one or more preceding outcomes.

In an embodiment, an embedding space of the encoded contextual intermediate representation is iteratively adjusted with the one or more structured tasks, by using a Dynamic Embedding Optimizer (DEO).

In an embodiment, one or more internal states of the one or more task specific AI agents are updated based on at least one of (i) performance of the one or more task specific AI agents, and (ii) feedback associated with the embedding space of the one or more task specific AI agents.

In an embodiment, the associated aggregated interpretability score is obtained by generating, by using the performance metrics optimizer, one or more performance metrics for the one or more task specific AI agents based on the corresponding structured task being performed; and obtaining the associated aggregated interpretability score for the one or more task specific AI agents based on the one or more performance metrics.

In an embodiment, the one or more instructions which when executed by the one or more hardware processors further cause dynamically tuning one or more performance metrics of at least the subset of the one or more task specific AI agents based on an associated complexity of the one or more structured tasks being performed.

In an embodiment, the one or more performance metrics comprise at least one of latency, throughput, and accuracy of the one or more task specific AI agents.

It is to be understood that both the foregoing general description and the following detailed description are exemplary and explanatory only and are not restrictive of the invention, as claimed.

## BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 depicts an exemplary system for optimizing performance of artificial intelligence (AI) agents, in accordance with an embodiment of the present disclosure.

FIG. 2, with reference to FIG. 1, depicts an exemplary high level block diagram of the system for optimizing performance of artificial intelligence (AI) agents, in accordance with an embodiment of the present disclosure.

FIG. 3 depicts an exemplary flow chart illustrating a method for optimizing performance of artificial intelligence (AI) agents, using the systems of FIG. 1-2, in accordance with an embodiment of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Black-Box Optimization (BBO) approaches have found optimal policies for systems that interact with environments with no analytical representation and that are complex in nature. However, such approaches are overlooked in AI tasks related aspects. It is very well known that optimization problems are prevalent in artificial intelligence domains. It is imperative that AI agents performing tasks are optimized and need special attention in solving such problems.

Embodiments of the present disclosure provide systems and methods for optimizing performance of artificial intelligence (AI) agents. More specifically, the system is also referred to as Black-box optimizing system that is configured to enhance the performance of agent chains through its application. The system is comprised of an interconnected framework of various units, each contributing to the autonomous optimization of AI agents within a chain. For instance, a Dynamic NLP Tuner is implemented which harnesses transformer-based models coupled with real-time learning algorithms to continuously refine natural language understanding and task responsiveness. An Adaptive Context Gating Mechanism (ACGM) within the Dynamic NLP tuner ensures dynamic information flow modulation, adapting in real-time to task complexities. The system also includes a Model Repository Analytics Engine (MRAE), which curates a repository of cutting-edge AI models and employs an Interpretability Aggregation Framework (IAF) for comprehensive model interpretability analysis. An Adaptive Model Matching System (AMMS) is utilized by the system for precise matching/mapping of AI agents to various corresponding tasks, by leveraging zero-shot learning metrics for enhanced compatibility assessment. In parallel, the Performance Metrics Optimizer (PMO) is implemented which applies multi-objective optimization and reinforcement learning techniques to dynamically adjust performance metrics across diverse operational scenarios.

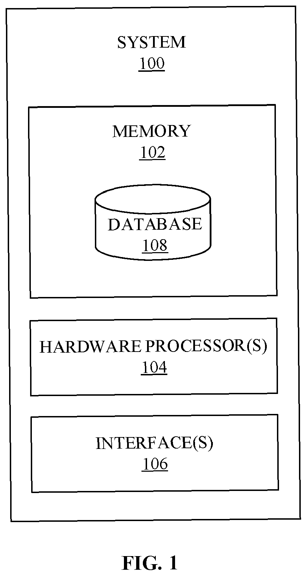

Referring now to the drawings, and more particularly to FIGS. 1 through 3, where similar reference characters denote corresponding features consistently throughout the figures, there are shown preferred embodiments and these embodiments are described in the context of the following exemplary system and/or method.

FIG. 1 depicts an exemplary system 100 for optimizing performance of artificial intelligence (AI) agents, in accordance with an embodiment of the present disclosure. In an embodiment, the system 100 is also referred to as Black-box optimization system, or Black-box optimizer, and interchangeably used herein. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises information pertaining to natural language processing (NLP) data, one or more structured tasks to be performed by various artificial intelligence (AI) agents, performance trends and suitability of the one or more structured tasks, mapping details of the structured tasks with AI agents, details of optimization of AI agents, various interpretability scores at AI agent level and across all AI agents (e.g., referred to as aggregated interpretability score). The database 108 further comprises encoded contextual intermediate representation, performance metrics, factors such as nature of the NLP data, the context of the one or more tasks, complexity details of the one or more structured tasks, feedback from all steps of the method performed, details of one or more internal states of the one or more task specific AI agents, and the like. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

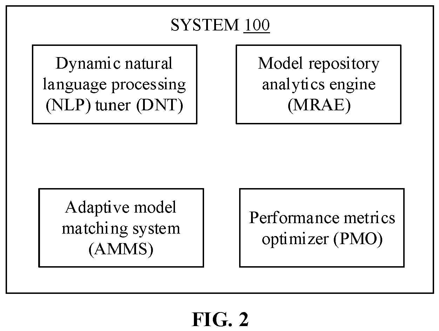

FIG. 2, with reference to FIG. 1, depicts an exemplary high level block diagram of the system 100 for optimizing performance of artificial intelligence (AI) agents, in accordance with an embodiment of the present disclosure. The system 100 includes a Dynamic NLP tuner (DNT), a model repository analytics engine (MRAE), an adaptive model matching system (AMMS), and a performance metrics optimizer (PMO). In an embodiment of the present disclosure, the DNT, the MRAE, the AMMS, and the PMO are implemented as at least one of a logically self-contained part of a software program, a self-contained hardware component, and/or, a self-contained hardware component with a logically self-contained part of a software program embedded into each of the hardware component that when executed perform the above method described herein. It is to be understood by a person having ordinary skill in the art or person skilled in the art that the above components of the system 100 depicted in FIG. 2 may either communicate with other components in a unidirectional or in a bidirectional manner at any given point of time. For the sake of brevity, the numeral reference to these components is not shown in FIG. 2 and such representation shall not be construed as limiting the scope of the present disclosure.

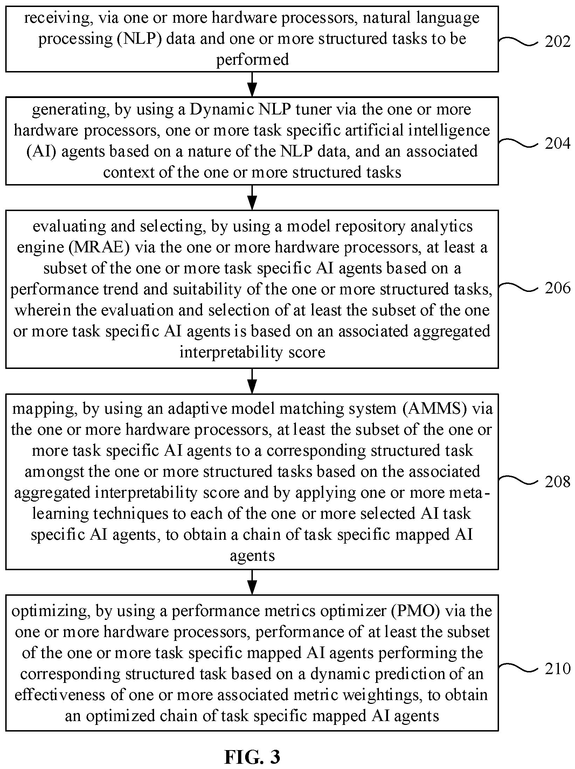

FIG. 3, with reference to FIGS. 1 and 2, depicts an exemplary flow chart illustrating a method for optimizing performance of artificial intelligence (AI) agents, using the systems 100 of FIG. 1-2, in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to components of the system 100 of FIG. 1, the block diagram of the system 100 depicted in FIG. 2, and the flow diagram as depicted in FIG. 3. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

At step 202 of the method of the present disclosure, the one or more hardware processors 104 receive natural language processing (NLP) data and one or more structured tasks to be performed. The expression 'structured tasks' may also be referred to as 'tasks' and may be interchangeably used herein. In an embodiment, the NLP data may include, but is not limited to, content from customer interactions, such as emails, chat messages, or social media posts. For example, a customer may send an email with the query, *"How do I reset my password for my account?"*. Another example may include product reviews such as user-generated reviews on e-commerce platforms which could be a review stating - *"The headphones have excellent sound quality, but the battery life is shorter than expected."*. The one or more structured tasks may include, but are not limited to, feedback analysis, for instance, analyzing survey responses to gather insights. The task could involve identifying key features appreciated by users, like the application's user-friendly interface, in the survey response. Another task could be providing healthcare assistance, for instance, assisting in diagnosing or patient monitoring based on medical records. The task may involve flagging the improvement in symptoms for further review or action by healthcare professionals.

At step 204 of the method of the present disclosure, the one or more hardware processors 104 generate, by using the Dynamic NLP tuner, one or more task specific artificial intelligence (AI) agents based on a nature of the NLP data, and an associated context of the one or more structured tasks. The expression 'task specific AI agents' may also be referred to as AI agents and may be interchangeably used herein. The AI agents include but are not limited to machine learning (ML) models, (e.g., artificial intelligence (AI) based machine learning models, large language models (LLMs), linear regression model(s), neural networks, reinforcement learning (RL) models, Generative AI models such as Generative Adversarial Networks (GANs), Transformer-based models such as Generative Pre-Trained (GPT) language models, variants of the above models/agents, and the like. It is to be understood by a person having ordinary skill in the art or person skilled in the art that the above examples of AI agents shall not be construed as limiting the scope of the present disclosure. To generate the one or more task specific AI agents, the one or more hardware processors 104 implement an encoder of an Adaptive Context Gating Mechanism (ACGM) comprised in the DNT for transforming the NLP data into an encoded contextual intermediate representation.

Further, the ACGM modulates the encoded contextual intermediate representation based on complexity of the one or more structured tasks to obtain the one or more task specific AI agents. In an embodiment, the encoded contextual intermediate representation is modulated based on an adaptability layer introduced in the NLP data and an adjustment of one or more gating parameters of the ACGM. The one or more gating parameters of the ACGM are adjusted based on one or more factors such as, but are not limited to, the nature of the NLP data, the context of the one or more tasks, and the feedback from one or more preceding outcomes (e.g., outcomes of earlier stages/steps, say steps 204 through 210, being performed by the system 100).

In an embodiment, an embedding space of the encoded contextual intermediate representation is iteratively adjusted with the one or more structured tasks, by using a Dynamic Embedding Optimizer (DEO). The DEO is a one of the components in the ACGM or the DNT.

In an embodiment, one or more internal states of the one or more task specific AI agents are updated based on at least one of (i) performance of the one or more task specific AI agents, and (ii) feedback associated with the embedding space of the one or more task specific AI agents.

The above step 204 is better understood by way of following description:

The Dynamic NLP tuner (also referred to as 'tuner' and interchangeably used herein) employs one or more transformer-based models which provide an enhanced understanding of natural language through their ability to process vast amounts of contextual information. The tuner leverages transfer and few-shot learning, thereby allowing the performance metrics optimizer (PMO) to rapidly adapt to new tasks by applying knowledge from previous experiences with minimal additional data or training.

As mentioned in step 202, a corpus of natural language processing (NLP) data and a dataset of structured task requirements (or also referred to as structured tasks, and interchangeably used herein) are fed to the system 100 and the system 100 processes the NLP data and task requirements for generating task specific agent(s) that can interpret and respond to new tasks rapidly. The integration of the ACGM, DEO, and a Contextual Meta-Adaptation (CMA) technique represents a significant advancement over traditional models, thus enabling the system 100 to adapt with minimal data and training. Below is the description illustrating how significant advancement through this integration is achieved over traditional approaches and models.

1. Integration of ACGM, DEO, and CMA:

a. Comprehensive Adaptation: The integration of these three mechanisms/techniques/units enables the system 100 to adapt at multiple levels - from the gating of information (ACGM) and the representation of data (DEO) to the overall learning strategy (CMA). This multi-level adaptation makes the system highly flexible and responsive to a wide array of challenges.

b. Enhanced efficiency and accuracy: The combination ensures that the AI system (or the system 100) not only becomes more efficient in processing and responding to tasks but also increases the accuracy and relevance of its outputs. For instance, in an NLP task, the system 100 can understand context better (by use of ACGM), represent words more effectively (by use of DEO), and quickly adapt to new types of queries (by use of CMA).

c. Rapid deployment and scalability: In practical applications, such as deploying AI solutions/systems in different domains or industries, this integration allows for rapid deployment and scalability. The system 100 can be quickly adapted to new domains with minimal additional training.

d. Reduced resource requirement: By optimizing at various levels (e.g., at various steps of FIG. 3), the integrated system can achieve higher performance with fewer computational resources. This is crucial for deploying AI in resource-constrained environments.

2. Comprehensive Adaptation:

a. Challenges: One of the challenges in comprehensive adaptation is dealing with data that varies greatly in quality and format. For example, in a multi-lingual NLP system, the data may include a mix of formal and colloquial language across different languages, which poses a challenge in maintaining consistent performance. Adaptation example: Consider that the system 100 used for sentiment analysis across different social media platforms. Each platform has its unique linguistic style. The ACGM dynamically adjusts the gating of information to focus on platform-specific linguistic features, wherein the DEO optimizes embeddings to better capture the nuances of each style, and CMA helps the system 100 quickly adapt to new or emerging online slang or expression trends.

3. Enhanced efficiency and accuracy

a. Efficiency challenge: An efficiency challenge arises when dealing with large-scale data, where processing speed becomes crucial. For instance, a real-time language translation service must process and translate text quickly without compromising accuracy. Accuracy Example: In automated customer support, the system might initially struggle with accurately interpreting user queries with ambiguous phrasing. Through the integration of ACGM, DEO, and CMA, the system 100 learns to identify key contextual clues that clarify ambiguity, improving both the efficiency and accuracy of responses over time. As the customer support AI continues to encounter a variety of user queries, ACGM dynamically adjusts to filter out irrelevant information, focusing on key phrases that indicate the user's actual intent. Simultaneously, DEO refines the word embeddings based on common phrases in customer support interactions, enhancing the model's ability to grasp nuanced language. CMA facilitates rapid adaptation to new types of queries or changes in user language patterns, ensuring the system's responses become progressively more precise and relevant.

4. Rapid deployment and scalability

a. Domain adaptation challenge: Adapting to new domains often involves retraining models with domain-specific data, which can be time-consuming and resource-intensive. For instance, an AI system trained for healthcare might struggle when repurposed for legal document analysis due to differences in terminology and language usage. Domain adaptation example: Imagine the AI system 100 is initially used for processing medical research papers. When repurposed for legal documents, the integrated ACGM-DEO-CMA framework enables rapid adaptation. ACGM adjusts to the formal language and specific legal jargon, DEO optimizes embeddings to reflect legal terminology accurately, and CMA uses a small set of annotated legal documents to quickly tune the model to the new domain, significantly reducing the time and data required for retraining.

5. Reduced resource requirement

a. Resource-constrained challenge: Deploying AI in environments with limited computational resources, like mobile devices or IoT (Internet of Things) devices, requires models to be efficient without sacrificing performance. Resource-constrained example: In a mobile-based language translation app, the integrated system must operate within the device's processing constraints. ACGM filters out unnecessary linguistic information to reduce computational load, DEO ensures that the embeddings are compact yet effective for translation, and CMA enables the model to adapt to new languages or dialects without extensive retraining. This results in an efficient yet powerful translation tool suitable for use in resource-limited mobile devices.

As mentioned above, the encoder of the ACGM in the DNT transforms the input natural language data into an intermediate representation, and a decoder of the ACGM in the DNT uses this representation to task specific AI agents aligned with the specific task requirements.

The ACGM modulates the flow of information between the encoder and the decoder based on the complexity of the tasks. The modulation is governed by a set of gating parameters $\theta_g$ dynamically adjust the information granularity.

More specifically, the AGCM dynamically controls the flow of contextual information between the encoder and decoder. The ACGM adaptively gates the encoded information such that the decoder receives a modulated signal tailored to the complexity and requirements of a current task. Further, the ACGM introduces a layer of adaptability that allows for variable focus on different parts of the input sequence, depending on the task at hand. Unlike static (or conventional) gating mechanisms, the ACGM adjusts its gating parameters in real-time. The adjustment of gating parameters is better understood by way of following mathematical representation:

$$C_a = \sigma(\theta_g \cdot H + b_g),$$

where $C_a$ is the contextually gated output representing an agent, $\sigma$ is the sigmoid activation function, $\theta_g$ represents the adaptive gating parameters, learned during training, H is the encoded contextual intermediate representation from the encoder, and $b_g$ is the bias term associated with the gating mechanism.

The adaptiveness of ACGM lies in the real-time optimization of $\theta_g$ which is updated based on a feedback loop that assesses the relevance of the encoded information with respect to the task context.

Below description illustrates the input sequence and processing of the same:

An example of a Customer Service Chatbot in a Telecommunications company is considered.:

Input Sequence Example: Customer Query (Raw Input): "Hey, I've been experiencing internet outages for the last three days, especially in the evenings. What's going on?" Processing the Input sequence with ACGM:

1. Initial encoding: The chatbot's NLP model (e.g., the system 100) first encodes this query into an intermediate representation. This could involve transforming the text into a sequence of word embeddings - numerical vectors that represent the semantic and syntactic properties of the words.
2. Contextual analysis by ACGM:

   a. The ACGM analyzes this intermediate representation to understand the context and intent of the query.
   b. It identifies key phrases like "internet outages" and "last three days," which are crucial for understanding the customer's issue.
   c. It also recognizes the urgency and potential frustration in the query based on words like "What's going on?"

3. Gating Mechanism Activation:

   a. Based on its analysis, the ACGM modulates the flow of information. It may prioritize information related to recent service disruptions, network issues in the customer's area, similar past queries, and so on.
   b. It gates out irrelevant information or less important details to focus the model's attention on solving the customer's specific problem.

4. Outcome:

   a. The chatbot, utilizing this contextually gated information, generates a response that addresses the customer's concern effectively, such as providing information on known outages in the area or steps for further troubleshooting.

The DEO on the other hand iteratively adjusts the embedding space for the encoded inputs, thus allowing for rapid alignment with new domains or tasks by optimizing a function $f(D|\theta_e|\theta_t)$. In other words, the adjustment of embedding space is mathematically notated as optimizing the function $f(D|\theta_e|\theta_t)$, where $D$ represents the domain-specific data, $\theta_e$ represents encoder parameters, and $\theta_t$ the task-specific parameters.

Domain-specific Hyperparameters/parameter example: Healthcare Data Analysis

Hyperparameters:

1. Embedding dimensionality: In healthcare data analysis, particularly in analyzing patient records and medical literature, higher dimensional embeddings might be required to capture complex medical concepts accurately.
2. Batch size: The size of data batches processed can affect the learning, where smaller batches might/may be used for more precise updates in medical data.
3. Regularization coefficient: Given the sensitivity of medical data, a higher regularization might/may be necessary to avoid overfitting on patient-specific data.
4. Dropout rate: To ensure generalization across various medical conditions, dropout rates can be adjusted to prevent over-reliance on specific features of the medical data.
5. Sequence length: In processing medical notes or prescriptions, the sequence length of the input data needs careful optimization to capture lengthy medical terms and conditions.

Task-specific Hyperparameters example: Sentiment Analysis in Social Media Posts

Hyperparameters:

1. Learning rate: Optimal for quick adaptation to the fast-changing language and expressions in social media.
2. Word embedding size: Larger embeddings might/may be beneficial to capture the wide range of expressions and slang in social media language.
3. Hidden layer size: In sentiment analysis, the size of hidden layers in neural networks can be crucial for capturing the nuances of sentiment.
4. Attention heads: The number of attention heads in models like transformers can be critical for focusing on relevant parts of a post for sentiment analysis.
5. Max pooling size: Adjusting the pooling size in convolutional layers to capture the most relevant features from text data in social media posts.

By doing the optimization, the DEO significantly reduces the time required for retraining AI agents on new tasks by refining the embedding space directly, which is a departure from traditional fine-tuning approaches. This is mathematically expressed as:

$$\theta_e^* = \arg min_{\theta_e} f(D|\theta_e|\theta_t) + \lambda \|\theta_e\|_2$$

where $\theta_e^*$ is an optimized set of encoder parameters, $f$ is the domain-specific objective function, $D$ is domain-specific NLP data, $\theta_t$ are the task-specific parameters, $\lambda$ is the regularization coefficient, and $\|\theta_e\|_2$ is the L2-norm of the encoder parameters, thus ensuring regularization.

The system 100 further incorporates the CMA technique that uses few examples to perform rapid adaptations. Examples to perform rapid adaptations, include:

a. Customer service transcripts: Text data from customer service interactions, including chat logs, email exchanges, and transcriptions of phone calls. Example: A customer chat message, "I'm having trouble logging into my account."
b. Social media posts: User-generated content on social media platforms like Twitter®, Facebook®, Instagram®, etc. Example: Tweets, status updates, comments, such as a tweet saying, "Loving the new update on the XYZ app!"
c. Product reviews: Reviews and ratings left by customers on e-commerce sites. Example: A review on an online shopping site, "The headphones have excellent sound quality, but the battery life is too short."
d. News articles: Articles from online news sources, magazines, and newspapers. Example: A news report on a website about a recent technological breakthrough.
e. Survey responses: Open-ended responses collected from surveys or feedback forms. Example: Responses to a customer satisfaction survey, like "The installation process was quick and easy."
f. Medical records: Patient-related text data such as doctor's notes, medical history, and diagnostic reports. Example: A doctor's notes saying, "The patient shows signs of improvement after the new medication regimen."
g. Legal documents: Text data from legal documents, contracts, and court case files. Example: Excerpts from legal contracts or court proceedings.

h. Research papers and journals: Academic writings, research papers, journals, and articles. Example: Abstracts and contents of scientific papers.

i. Books and literature: Text from fiction and non-fiction books, poems, and other literary works. Example: Passages or chapters from novels or literary essays.

j. Emails and letters: Personal and professional correspondence. Example: Business emails discussing project details or personal letters.

k. Technical manuals and documents: Instruction manuals, user guides, and technical documentation. Example: User manual instructions for a new software application.

The CMA technique updates the internal state 5 of the AI agents by a function $g(S,E|\theta_f)$, where E represents the few-shot examples and $\theta_f$ the few-shot learning parameters. The few-shot learning parameters are mentioned below as non-limiting examples:

a. Learning rate ($\alpha$):

i. In few-shot learning, the learning rate is typically smaller to avoid overfitting due to the limited amount of data. It determines how rapidly the model updates its knowledge based on new data.

b. Meta-learning rate ($\beta$):

i. This is the rate at which the meta-learning model (the model that learns how to adjust the main model for new tasks) updates its parameters. It's crucial for the model to quickly incorporate the insights gained from each new task.

c. Shot number (K-Shot):

i. This refers to the number of examples per class in the training data (e.g., 5-shot learning means 5 examples per class). It's a critical parameter that defines the scope of the few-shot learning task.

d. Number of classes (N-Way):

i. In N-way classification, this parameter specifies the number of different classes represented in the few-shot learning task. For instance, 5-way classification involves 5 different classes.

e. Task batch size:

i. This parameter defines the number of tasks sampled during each training iteration. A larger batch size offers more variety but requires more computational resources.

f. Regularization coefficients:

i. Regularization helps prevent overfitting, which is a common risk in few-shot learning due to the limited data. Parameters like L1 or L2 regularization coefficients are adjusted to control this aspect.

g. Number of adaptation steps:

i. This refers to the number of gradient descent steps taken when adapting the model to a new task. More steps allow for finer adaptation but increase computation time.

h. Embedding layer dimensions:

i. In models where data is first transformed into embeddings, the size of these embeddings can affect how well the nuances of the few-shot tasks are captured.

More specifically, one or more internal states of the one or more task specific AI agents are updated based on at least one of (i) performance of the one or more task specific AI agents, and (ii) feedback associated with the embedding space of the one or more task specific AI agents. This ensures that the AI agents are rapidly adapting to new tasks using a minimal number of training examples. The system 100 applies meta-learning principles to update the internal states of the AI agents for quick task-specific adjustments. Mathematically, the internal states updation is expressed as:

$$S' = g\big(S, E | \theta_f\big),$$

where S' is updated state of AI agent(s), *g* is the adaptation function, which is learned during the meta-learning phase. 5 is the original state of the AI agent that produced $C_a$. E represents the new task examples. $\theta_f$ are the parameters that govern the few-shot learning adaptation.

The CMA techniques intelligence lies in its contextual application of meta-learning, where the adaptation is not just generalized across tasks but is also tailored to the specifics of each task. Below illustrates an example pseudo code for the DNT implementation to perform associated steps as described in the method of the present disclosure.

```
# Pseudocode for the Dynamic NLP Algorithm Tuning Module using the novel ED-
TuneNet model
class DynamicNLP Algorithm TuningModule:
# Initializer for the module
# ed_tunenet: The novel encoder-decoder network designed for task-specific NLP
tuning
# deo_strategy: Strategy object for Dynamic Embedding Optimization
# cma_algorithm: Algorithm object for Contextual Meta-Adaptation
def_init_(self, ed_tunenet, deo_strategy, cma_algorithm):
self.ed_tunenet = ed_tunenet # The core encoder-decoder model
self.deo_strategy = deo_strategy # DEO strategy instance
self.cma_algorithm = cma_algorithm # CMA algorithm instance


# Processes the natural language input data and task requirements to produce an
agent for an agent chain
def create_agent_for_chain(self, language_data, task_requirements):
task_context = self.generate_task_context(task_requirements)
optimized_embeddings = self.deo_strategy.optimize(self.ed_tunenet.encoder,
task_context)
self.ed_tunenet.update_encoder(optimized _embeddings)
adapted_state = self.cma_algorithm.adapt(self.ed_tunenet, language_data,
task_context)
self.ed_tunenet.update_state(adapted_state)
agent_output = self.ed_tunenet.decode(task_context)
return NLP_Agent(agent_output, adapted_state)
# Generates a context vector based on the task requirements
def generate_task_context(self, task _requirements):
return task_context_network(task _requirements)
# A class representing an NLP agent to be used in an agent chain
class NLP_Agent:
def_init_(self, output, state):
self.output = output # The output from the ED-TuneNet model
self.state = state # The internal state of the agent after adaptation
# Integrates this agent into an agent chain
def integrate_into_chain(self, agent chain):
agent_chain.add_agent(self)
# Updates the agent's state based on new data or feedback
def update_state(self, new data):
# Logic to update the agent's state
updated_state = some_update_function(new_data, self.state)
self. state = updated_state
# Interacts with other agents in the chain or external systems
def interact_with_others(self, other_agents):
# Logic for interaction with other agents
# This could involve data exchange, state synchronization, or cooperative decision-
making
perform_interactions(other_agents, self.state)
# Responds to changes in the operational environment
def adapt_to_environment(self, environment signals):
# Logic for adapting to new environmental conditions
# This could involve adjusting internal parameters or changing behavior patterns
self.state = adapt_state_to_environment(environment_signals, self.state)
#... Other methods to interact with the agent or update its state
# Additional utility functions (like some_update_function, perform_interactions,
adapt _state_to_environment) would be defined here.
```

The above pseudo code and the step of generating the task specific AI agents is better understood by way of following description:

The ACGM serves as an advanced feature in AI agents, particularly in natural language processing (NLP), that dynamically controls the flow of information within the system 100. For instance, a customer service chatbot is considered to illustrate how ACGM works:
Scenario:

Imagine a chatbot designed to handle customer service inquiries for an electronics retailer. The chatbot is equipped with a transformer-based NLP model that utilizes an Adaptive Context Gating Mechanism.

Example of ACGM in Action:

Customer Inquiry: A customer asks, "My new Xtron5000 TV has a flickering screen.
What should I do?"
Initial Processing: The chatbot's NLP model, using its encoder (ED-Enc), processes this natural language input and converts it into an intermediate representation that captures the linguistic and semantic features of the query.
ACGM Activation: The ACGM assesses the complexity of the query. In this case, it recognizes a product issue related to a specific model (Xtron5000 TV) and a technical problem (flickering screen). Based on the task's context - troubleshooting electronics - the ACGM dynamically adjusts to prioritize information related to technical support and product specifications over other information.
Information Gating: For complex technical inquiries, the ACGM may allow more detailed technical information through the gating mechanism, enhancing the model's focus on technical aspects of the query.
Conversely, if the query were about general product information, the ACGM might gate differently, focusing on broader product features.
Response Formulation: The chatbot, using the contextually gated output from ACGM, generates a response that accurately addresses the specific issue, such as guiding the customer through troubleshooting steps for the flickering screen issue.
Continuous Learning: Over time, as the chatbot encounters various types of inquiries, the ACGM continuously learns and adapts its gating strategy. For instance, it may become more proficient in distinguishing between technical support queries and general product inquiries, optimizing its gating parameters for efficiency and accuracy.
Significance of ACGM in this Scenario:

The ACGM allows the chatbot to adaptively focus on the most relevant aspects of a customer's query. It enhances the chatbot's ability to handle a wide range of inquiries, from simple product questions to complex technical issues. By dynamically gating information, the ACGM helps the chatbot to provide more accurate, contextually relevant responses, improving customer satisfaction.

Further, the step of modulation based on introduction to adaptability layer in the NLP data is better understood by way of following description:

1. Introduction of the Gating Layer in NLP Data Processing:

a. Layer Positioning: The ACGM is typically positioned after the initial encoding stage where raw NLP data (like text) has been transformed into an intermediate representation (such as embeddings or feature vectors). This intermediate representation contains rich linguistic and semantic information extracted from the original text.
b. Function of the Layer: The gating layer acts as a dynamic filter. Its role is to selectively emphasize or de-emphasize certain features in the intermediate representation based on the context and requirements of the task at hand.

2. Gating Parameters in ACGM:

a. Gating Parameters Overview: These parameters determine how the information in the intermediate representation is modulated. They can include weights, thresholds, and other factors that influence the extent to which different aspects of the data are allowed to pass through the gating mechanism.
b. Types of Parameters: (i) Gating Weights: Gating weights decide how much of each feature should be allowed through the gate to the next layer of the model. (ii)Threshold Parameters: They can define the conditions under which certain information is considered relevant or irrelevant. (iii) Context Vectors: context vectors are used to encapsulate the overall context of the input data. (iv) Attention Scores: In models that incorporate attention mechanisms, attention scores can be part of the gating parameters, highlighting the parts of the input data that should be focused on. (v) Activation Functions: The type of activation function used in the gating mechanism (like sigmoid or softmax) can influence how the input data is modulated.

c. Weights: Dictate the importance of different features in the intermediate representation.
d. Thresholds: Set boundaries for activating or suppressing certain features.
e. Adaptation Rates: Determine how quickly the gating mechanism responds to changes in context.

3. Adjustment of Gating Parameters:

a. Context-Driven Adjustment: The primary driver for adjusting gating parameters is the context of the NLP task. This includes the specific nature of the text being processed (such as topic, complexity, and language style) and the requirements of the task (like sentiment analysis, content summarization, etc.).
b. Learning and Feedback Mechanisms: The learning mechanism in ACGM refers to the method by which the gating system learns to modulate the flow of information. This could be through supervised learning, where the system 100 is trained with labeled data to recognize which features are relevant in different contexts, or through unsupervised learning, where the system 100 autonomously identifies patterns and adjusts its gating strategy. Additionally, reinforcement learning can be employed, particularly in dynamic environments, where the system learns from the outcomes of its actions via rewards or penalties. On the other hand, the feedback mechanism in ACGM involves using the outcomes of the gating decisions to improve future performance. This includes backpropagating errors from the output back to the gating mechanism in a neural network, adjusting the gating parameters based on the success or failure of previous gating decisions. Continuous feedback, such as user responses or performance metrics, is used to refine the gating strategy over time, ensuring that the system becomes increasingly adept at handling various types of input data effectively.
c. Machine Learning Models: Often, machine learning models, especially those based on reinforcement learning or other adaptive algorithms, are used to adjust the gating parameters. These models learn from historical data and performance feedback.
d. Real-Time Data Analysis: In some systems, real-time analysis of incoming NLP data can trigger adjustments. For example, if the system detects a shift in the topic or complexity of the text, it may adjust the gating parameters accordingly.
e. Performance Metrics Feedback: Feedback based on performance metrics like accuracy, processing speed, and user satisfaction can also inform adjustments. If certain configurations of parameters consistently lead to better outcomes, the system will learn to favor those configurations.
f. Continuous Optimization: The adjustment of gating parameters is an ongoing process. As the system encounters more data and completes more tasks, it refines its gating strategy for improved efficiency and accuracy.

The step of adjusting gating parameters is better understood by way of following description. Consider the Customer Service Chatbot.

1. Customer Service Chatbot

- Initial Outcome: Suppose the ACGM in a customer service chatbot initially allows too much technical jargon in its responses, leading to customer confusion.
- Feedback: Customer feedback and interaction logs indicate that responses are too complex and not user-friendly.
- Adjustment: The ACGM adjusts its parameters to reduce the emphasis on technical terms and increase the focus on simpler, more straightforward language.
- Subsequent Outcome: The chatbot starts providing more accessible and easily understandable responses, leading to improved customer satisfaction scores.

2. Medical Diagnosis AI

- Initial Outcome: A medical diagnosis AI initially places too much emphasis on common symptoms, leading to frequent misdiagnosis of rare conditions.
- Feedback: Clinical review and performance audits indicate a need for better recognition of rare disease indicators.
- Adjustment: The ACGM modifies its gating parameters to balance the weight given to common and rare symptoms.
- Subsequent Outcome: The AI starts identifying rare conditions more accurately, improving diagnostic accuracy.

The step of internal states updation of the task specific AI agents is better understood by way of following description. A sentiment analysis system for social media is considered as an example. Imagining that a system is designed to analyze sentiment in social media posts. This system uses an NLP model that converts text data into embeddings, which are vector representations of words or phrases. These embeddings are then used to determine the sentiment expressed in the posts. The following is performed by the system 100.

1. Initial State: The system is initially configured with a standard set of word embeddings, which provide a general representation of the language data.

2. Introduction of DEO: Over time, the system encounters various types of posts, including colloquial language, internet slang, and emoticons, which are not well-represented by the standard embeddings. The process or steps performed by the DEO is as follows:

a. Data Analysis: The system 100 analyzes the types of language and expressions commonly found in social media posts. It identifies gaps in its current embedding representations, such as the inability to accurately interpret internet slang or emoticons.

b. Embedding Adjustment: The DEO is applied to adjust the embeddings dynamically. For example, the system may start altering the vector representations of certain slang words or phrases to better capture their sentiment in the social media context.

c. Optimization strategy: The system 100 uses (or may use) techniques like transfer learning to incorporate knowledge from external datasets that include similar language styles. Alternatively, it could apply unsupervised learning methods to adapt the embeddings based on the unique characteristics of the dataset it encounters.

d. Feedback loop: The system 100 continuously evaluates the effectiveness of the newly optimized embeddings in sentiment analysis tasks. Based on feedback - such as accuracy metrics or misclassification rates - the system further refines the embeddings.

e. Outcome: After several iterations, the system 100 develops a set of dynamically optimized embeddings that are more attuned to the nuances of social media language. The sentiment analysis becomes more accurate, particularly in interpreting expressions that are specific to social media.

Significance of DEO in the above example: The DEO allows the sentiment analysis system to evolve its understanding of language as used in a specific context (social media), which can be quite different from standard language models. By continuously adapting its embeddings, the system 100 remains relevant and effective, even as language use on social media evolves.

Referring to steps of FIG. 3, at step 206 of the method of the present disclosure, the one or more hardware processors 104 evaluate and select, by using a model repository analytics engine (MRAE), at least a subset of the one or more task specific AI agents based on performance trends (or a performance trend) and suitability of the one or more structured tasks. In an embodiment, the evaluation and selection of at least the subset of the one or more task specific AI agents is based on an associated aggregated interpretability score.

In an embodiment, the associated aggregated interpretability score is obtained by generating, by using the performance metrics optimizer, one or more performance metrics for the one or more task specific AI agents based on the corresponding structured task being performed; and obtaining the associated aggregated interpretability score for the one or more task specific AI agents based on the one or more performance metrics.

The above step of evaluating and selection of at least the subset of task specific AI agents is better understood by way of following description. The MRAE is configured to manage a repository of generated task specific AI agents. It goes beyond conventional repositories by not only storing but also actively evaluating and selecting the AI agents based on performance trends and task suitability. The MRAE is continuously updated with the latest AI agents, including, but not limited to, advancements in Natural Language Processing (NLP) like transformer models and breakthroughs in Computer Vision (CV) such as Vision Transformers. A distinctive feature of the MRAE is its real-time tracking ability that monitors the evolution of AI agent's performance, and adapting to the (latest) feedback (from users) and evolving baselines. The evaluation and selection step are mathematically expressed as follows:

The AI agent performance is quantified using a vector $\vec{p}$ where each element represents a metric score. The MRAE applies time-series analysis to $\vec{p}$ to discern performance trends. A decision function $D(m, \vec{t})$ then evaluates AI agent 'm' against trends $\vec{t}$ to determine its suitability for upcoming tasks.

The interpretability is enhanced through Explainable AI (XAI) techniques as known in the art. This is particularly achieved by integrating methods Layer-wise Relevance Propagation (LRP) and Gradient-weighted Class Activation Mapping (Grad-CAM) for CV models, and Attention Visualization for NLP models. The system 100 employs an interpretability aggregation framework that consolidates insights from various XAI methods, thus providing a multi-faceted view of model performance. The interpretability aggregation framework (IAF) for computing interpretability aggregation score is better understood by way of following description. The IAF (not shown in FIGS.) is part of the MRAE and is configured to quantitatively assess and aggregate the interpretability of diverse AI agents. The IAF incorporates a multi-dimensional approach that synthesizes insights from various Explainable AI (XAI) techniques into a cohesive interpretability profile for each AI agent. Moreover, the IAF challenges the status quo by transcending single-method XAI evaluations, there by integrating both model-agnostic and model-specific interpretability metrics into a unified scoring system. The IAF employs a weighting schema that assigns relevance scores to different XAI methods based on the AI agent's domain, architecture, and the nature of the task it is designed to perform. Thus, the IAF ensures that the task specific AI agents selected for deployment are not only high-performing but also maintain a level of transparency and explainability, fostering trust and reliability in automated decision-making systems. The aggregated interpretability score is used to guide the selection of task specific AI agents, thus ensuring that the ones chosen align with regulatory and ethical standards for AI explainability. Mathematically the interpretability score is described as below:

The interpretability score for the AI agent model 'm', $I(m)$ is computed as a weighted sum of individual XAI method scores: $I(m) = \Sigma_j w_j X_j(m)$. Here, $w_j$ represents the weight assigned to the $j^{th}$ XAI method, and $X_j(m)$ is the interpretability score provided by that method for the AI agent m.

The IAF dynamically calibrates the weights $w_j$ using a learning algorithm (as known in the art) that considers the historical utility of the XAI method's insights for improving AI agent's selection and performance.

The IAF also adjust its aggregation strategy based on feedback from deployment outcomes, thus allowing it to evolve its interpretability assessments over time and in its adaptive weighting mechanism that reflects the practical utility of XAI methods in real-world applications. Further, the IAF also incorporates a feedback loop from the operational deployment of AI agents, which is used to refine the interpretability evaluations continuously. The learning algorithm as mentioned above addresses the challenge of objectively quantifying and improving the interpretability of AI models, which is a subjective and multifaceted aspect of AI systems. The learner algorithm is configured to perform interpretability assessment by learning the utility and relevance of different XAI methods in real-world scenarios. It dynamically adjusts the weights assigned to various interpretability metrics based on their demonstrated utility in improving model selection outcomes. The learner algorithm operates by optimizing a utility function U that measures the effectiveness of interpretability scores in selecting AI agents that achieve successful real-world performance and compliance with interpretability standards. The utility function is defined as:

$$U(W, H) = \sum_{i=1}^{N} \alpha_i . R(m_i . h_i)$$

where W is the matrix of weights assigned to different XAI techniques. H is the historical data consisting of pairs $(m_i . h_i)$ of AI agents and their deployment outcome. $\alpha_i$ is a factor that scales the relevance of each deployment outcome based on its recency and impact. $R$ is a reward function that assigns high values when models with high interpretability scores lead to positive outcomes.

The steps for the above learning algorithm are provided below by way of examples:

1. Initialize the weight matrix $W$ with equal weights for all XAI techniques.
2. Collect deployment outcome data $H$ for models evaluated by the IAF.
3. Apply the utility function $U$ to calculate the effectiveness of current weight assignments.
4. Use a gradient ascent method to update $W$, maximizing $U$.

Regularly retrain the algorithm with new data to refine weight assignments. The learner algorithm introduces a feedback mechanism that utilizes actual deployment outcomes to tune the interpretability assessment process, which serves as a self-optimizing framework of the system 100. The adaptive weighting of XAI techniques based on deployment outcomes is another aspect of the present disclosure that moves beyond static or heuristic-based weighting systems. It uses actual performance data to make evidence-based adjustments, which is a significant step forward in the field of XAI.

The evaluation and selection of task specific AI agents may be further better understood by way of following example:

1. **AI agent is a customer service chatbot:**

   a. **Selection:** Among various chatbot AI agents, the MRAE selects those that have consistently demonstrated high accuracy in understanding and responding to customer queries across multiple domains.
   b. **Performance Trend:** Agents with a trend of improving response quality and reduced instances of misinterpretation over time.
   c. **Suitability:** Selected based on their ability to handle a diverse range of customer queries and their compatibility with the company's customer service platform.

### 2. **Financial Advisory Agents:**

a. **Selection:** The MRAE chooses agents that have shown effectiveness in providing accurate financial advice, based on historical performance in scenarios with varying market conditions.
b. **Performance Trend:** Agents that adapt well to market changes and provide consistently reliable advice.
c. **Suitability:** Selected for their ability to process complex financial data and adhere to regulatory compliance standards.

### 3. **Healthcare Diagnostic Agents:**

a. **Selection:** Agents that have a high success rate in diagnosing medical conditions from symptoms and medical imaging data.
b. **Performance Trend:** Agents with a trend of increasing accuracy in diagnosis and fewer false positives/negatives.
c. **Suitability:** Chosen for their compatibility with medical databases and ability to handle diverse medical cases.

### 4. **Language Translation Agents:**

a. **Selection:** Agents that excel in accurately translating between specific language pairs, with a focus on contextual and cultural accuracy.
b. **Performance Trend:** Agents showing continual improvement in handling idiomatic expressions and technical jargon.
c. **Suitability:** Selected for specific language pairs and contexts, like legal documents or technical manuals.

### 5. **E-commerce Recommendation Agents:**

a. **Selection:** Agents that have demonstrated high effectiveness in suggesting products based on user browsing and purchase history.
b. **Performance Trend:** Agents with a trend of increasing user engagement and successful recommendations.
c. **Suitability:** Selected for their ability to process large datasets and personalize recommendations.

- **Evaluating Performance Trends and Suitability:**

  ○ **Performance Trends Evaluation:**

  - Analyzing historical data to assess the improvement or consistency in an agent's performance.
  - Monitoring key metrics like accuracy, response time, user satisfaction scores, and adaptability to changes.

  ○ **Determining Suitability:**

  - Matching the agent's capabilities with the specific requirements of the task.
  - Considering factors like the agent's compatibility with existing systems, its ability to handle the volume and complexity of data specific to the task, and adherence to industry-specific standards or regulations.
  - Assessing the AI agent's interpretability score, which reflects how transparent and understandable the agent's decision-making process is. This is especially important for tasks requiring compliance with ethical standards or explainability to stakeholders.

The above step of obtaining the aggregated interpretability score may be further understood by way of following description. Consider Healthcare Diagnostic AI agent, wherein an initial outcome includes providing accurate diagnoses but lacks clear explanations for its conclusions. The feedback includes clinicians and patients express difficulty in understanding the basis of the AI's decisions, thus leading to trust issues. The IAF analyzes the AI agent and increases the weight of interpretability metrics, such as feature importance visualization. The subsequent outcome includes the AI agent starts providing more interpretable outputs, like highlighting key symptoms and medical history that led to its diagnosis, thereby improving clinician and patient trust.

Referring to steps of FIG. 3, at step 208 of the method of the present disclosure, the one or more hardware processors 104 map, by using an adaptive model matching system (AMMS), at least the subset of the one or more task specific AI agents to a corresponding structured task (also referred to as 'associated structured task' and interchangeably used herein) amongst the one or more structured tasks based on the associated aggregated interpretability score and by applying one or more meta-learning techniques to each of the one or more selected AI task specific AI agents, to obtain a chain of task specific mapped AI agents. The above step of mapping the task specific AI agents to corresponding tasks is better understood by way of following description. The hardware processors 104 implement the AMMS that matches/maps AI agents to specific tasks with precision. It leverages the latest in comparison metrics and meta-learning techniques to fine-tune its matching algorithms (stored in the memory 102), thus ensuring the most efficient and accurate pairing between structured tasks and AI agents. Unlike traditional model matching systems that use static metrics for comparison, AMMS employs one or more dynamic comparison metrics that are enhanced by zero-shot learning capabilities. This allows the AMMS and the system 100 to evaluate AI agent-task compatibility even when no prior direct comparisons exist. The mapping at least the subset of the one or more task specific AI agents to a corresponding structured task amongst the one or more structured tasks is mathematically formulated as below:

The system 100 defines a compatibility function $C(m, t)$ which measures the suitability of an AI agent m for a task $t$, incorporating metrics from zero-shot learning evaluations. This function is continuously refined through a meta-learning process, which is denoted as $M(\Theta, X)$, where $\Theta$ represents the parameters of the compatibility function, and E is the set of evaluation experiences gained from previous matching attempts. The meta-learning technique implemented by the AMMS allows the system 100 to optimize its matching algorithms (not shown in FIGS.) by learning from each matching operation it performs. This 'learning to learn' approach is pivotal in enabling the system 100 to adapt to new tasks and models rapidly. The steps for algorithm are illustrated below by way of examples:

1. Initialize the compatibility function C with baseline metrics.
2. For each new matching task, apply zero-shot learning techniques to predict model-task compatibility in the absence of direct historical data.
3. Collect performance data from the matched pairs in operation.
4. Apply the meta-learning algorithm M to update C based on the new data, optimizing the parameters $\Theta$ to improve future matches.

The AMMS role in the system 100 is critical in the way of in its integration of zero-shot learning within the model matching domain, thus allowing it to assess compatibility for new, and unseen tasks. Furthermore, the meta-learning approach represents a significant advancement, enabling the system to evolve its matching criteria based on empirical results. The meta-learning technique is configured to enable the AMMS to 'learn how to learn'. This means that the system 100 not only learns to match AI agents to tasks but also learns to improve the way it makes these matches based on feedback from previous matching attempts. This is achieved by using past match outcomes to inform future matching decisions, thereby optimizing the matching process over time. The matching and learning of matched AI agent with task details is expressed mathematically by way of following description:

The meta-learning technique as implemented by the AMMS of the system 100 operates using a set of algorithms that iteratively update a matching function $M$, defined over the space of AI Agents m and tasks t, with parameters $\Theta$. The set of algorithms, include but are not limited to,

a. Model-Agnostic Meta-Learning (MAML): MAML is designed to quickly adapt to new tasks with only a small number of gradient steps. It trains a model on a variety of learning tasks in such a way that the model can perform well on a new task after just a few updates.
b. Reptile: Similar to MAML, Reptile is an optimization algorithm for meta-learning. It works by repeatedly sampling tasks, training on them, and moving the initialization towards the trained weights on these tasks.
c. ProtoNets (Prototypical Networks): ProtoNets are used in few-shot classification tasks. These learn a metric space in which classification can be performed by computing distances to prototype representations of each class.
d. Meta-SGD (Meta Stochastic Gradient Descent): Meta-SGD is an extension of MAML that not only learns the initial parameters of the model but also learns the update rule itself. It effectively learns the learning rate for each parameter.
e. Bayesian Model-Based Meta-Learning: These algorithms use Bayesian approaches to meta-learning, where the learning is based on updating a posterior belief over the model parameters given the observed data from various tasks.
f. Learning to Learn by Gradient Descent by Gradient Descent (L2L): This approach involves training an optimizer (usually a small neural network) that can optimize the main task-specific model. It essentially learns the optimization algorithm itself.
g. Matching Networks: Used primarily for one-shot learning tasks, Matching Networks learn a network that maps a small labeled support set and an unlabeled example to its label, using an attention mechanism over the support set.
h. Meta-Curvature: This is an approach that learns the second-order information about the task distribution to better initialize a model for new tasks with minimal training data.
i. Black-Box Meta-Learning: Black-box methods treat the learning algorithm as a black box that can be optimized, often using reinforcement learning or evolutionary strategies.

j . Memory-Augmented Neural Networks: These involve networks that incorporate a memory component, enabling them to remember and utilize past experiences to quickly adapt to new tasks.

This function is refined using feedback from the performance of AI agents $m \in M$ on tasks $t \in T$. The updated rule is given by: $\Theta_{new} = \Theta_{old} + \eta.\triangle_\Theta J(M(\Theta_{old}. M. T), H)$ where $\eta$ is the learning rate, $J$ is a performance evaluation function that measures the success of matches made by $M$ using historical data $H$. $\triangle_\Theta J$ is the gradient of $J$ with respect to the parameters $\Theta$, indicating the direction of optimization.

The above step of mapping and supported description is better understood by way of the following example. An AI-driven platform that assigns various tasks to a pool of agents, each skilled in different domains such as language translation, image processing, data analysis, etc. is considered as an example. The first step is to identify tasks. Assuming a new task arrives, say, "Translating a set of technical documents from English to French.". The AMMS first identifies the specific requirements of this task, such as language proficiency in both English and French, familiarity with technical jargon, and the ability to handle large volumes of text efficiently. The second step is to perform AI agent evaluation and selection and apply the meta-learning technique. In this case, the AMMS evaluates available AI agents in the pool. Each AI agent has a history of tasks performed, success rates, areas of expertise, and feedback scores. The system 100 uses historical data to understand which types of AI agents have been successful in similar tasks before. For instance, it may analyze past translation tasks, focusing on factors like language pairs, document complexity, and agent performance metrics. The system 100 learns from this data to create a model that predicts the suitability of each AI agent for the new task. Further, the third step includes mapping the AI agent to tasks. Based on the meta-learning model's predictions, the AMMS maps the most suitable AI agent(s) to the task. In this example, it would select AI agents who have shown proficiency in translating technical documents and are skilled in both English and French. This matching is not just based on static criteria but also on dynamic factors such as current workload, recent performance improvements, any new training the agents might have undergone, and the like. Consider the below example of meta-learning in the AMMS of the system 100. Assuming that AI Agent A and AI Agent B both have experience in language translation, but AI Agent A recently completed an advanced course in technical translation and has shown improvement in handling technical documents. The meta-learning model/technique within the AMMS recognizes this development. It understands that while both agents are capable, AI Agent A's recent training makes them more suited for this specific task. The system 100, therefore, adapts its matching strategy, giving more weight to recent learning and improvements, and selects the AI Agent A for the translation task. As more tasks are processed, the AMMS continually updates its meta-learning model/technique with new data, thus refining its predictions and matching strategies. This ongoing/continual process ensures that the AMMS becomes increasingly efficient and accurate in mapping task specific AI agents to structured tasks, and adapting not just to the AI agents' static skill sets but also to their evolving capabilities and the changing nature of tasks.

Referring to steps of FIG. 3, at step 210 of the method of the present disclosure, the one or more hardware processors 104 optimize, by using a performance metrics optimizer (PMO), performance of at least the subset of the one or more task specific mapped AI agents performing the corresponding structured task based on a dynamic prediction of an effectiveness of one or more associated metric weightings, to obtain an optimized chain of task specific mapped AI agents. More specifically, the one or more performance metrics of at least the subset of the one or more task specific AI agents are dynamically tuned/optimized based on an associated complexity of the one or more structured tasks being performed. In an embodiment, the one or more performance metrics comprise at least one of latency, throughput, and accuracy of the one or more task specific AI agents.

The above step of optimizing the performance of at least the subset of the one or more task specific mapped AI agents is better understood by way of following description.

The PMO or the hardware processors 104 are configured to optimize the performance of AI agent chains, which are sequences of AI agents that perform a series of tasks. The PMO balances and optimizes the performance metrics that are indicative of the AI agent chain's efficiency and accuracy in varying operational contexts. The PMO or the hardware processors 104 of the system 100 integrate advanced multi-objective optimization techniques (as known in the art techniques) to negotiate the trade-offs between competing performance metrics, such as speed, accuracy, resource consumption, and adaptability. The trade-off as mentioned above is better understood by way of following description provided as non-limiting examples:

a. Understanding the interplay of metric(s): The PMO first understands how different metrics interact with each other. For instance, increasing speed might reduce accuracy, or enhancing adaptability might increase resource consumption. Understanding these relationships is key to effective optimization.

b. Setting priority based on context: Depending on the application's context, certain metrics may be prioritized over others. For a real-time system, speed might be prioritized, whereas, for a diagnostic system, accuracy would be paramount. The PMO adjusts its optimization strategies based on these priorities.

c. Multi-objective optimization techniques: The PMO employs algorithms (not shown in FIGS.) capable of handling multiple objectives simultaneously. Techniques like Pareto optimization can be used to find optimal solutions where improvement in one metric doesn't excessively degrade others.

d. Machine learning and heuristic approaches: The PMO might/may use machine learning models to predict the outcomes of different optimization strategies or heuristic algorithms to quickly find satisfactory solutions that balance multiple metrics.

e. Dynamic adaptation: The PMO dynamically adjusts the trade-offs based on real-time performance data. If a system becomes too slow, it might temporarily reduce accuracy requirements to speed up, or if resource consumption spikes, it might scale back certain functionalities.

f. Feedback loops and continuous learning: Incorporating feedback loops allows the PMO to learn from the outcomes of its previous optimization efforts. This continuous learning process helps in fine-tuning the balance between different metrics.

g. Customization for specific scenarios: The PMO can be customized for specific scenarios or tasks. For example, in a low-resource setting like a mobile device, the PMO would focus more on reducing resource consumption.

h. User or administrator input: Sometimes, the trade-offs are adjusted based on input from users or system administrators who set preferences or constraints for certain metrics.

i. Scalability considerations: In systems that need to scale, the PMO ensures that the trade-offs made at smaller scales still hold as the system grows, thus adjusting its strategies as necessary.

This is critical for agent chains where the performance of individual agents must be harmonized to achieve the best overall system performance. In particular, the system 100 implements reinforcement learning (RL) algorithms (as known in the art and stored in the memory 102 and invoked for execution) to dynamically predict the effectiveness of different metric weightings. This predictive capability allows the PMO to proactively adjust metric weightings in anticipation of changes in operational contexts or in the characteristics of the tasks the agent chain is processing. The mathematical formulation and RL integration is described below by way of exemplary embodiments.

The reinforcement learning model within the PMO is defined by a value function $V(s,\vec{w})$ that estimates the expected cumulative reward of applying a particular weighting vector $\vec{w}$ to the performance metrics in a given state s of the agent chain.

$$V(s,\vec{w}) = E\left[\sum_{t=0}^{\infty} \gamma^t R(s_t, \vec{w})\right]$$

where $R(s_t, \vec{w})$ is the reward function that assigns a score based on the performance of the agent chain at time $t$ using weightings $\vec{w}$. $\gamma$ is the discount factor that models the importance of future rewards.

The steps for the RL integration algorithm is provided below by way of illustration:

1. Initialize a policy that defines the initial metric weightings for the agent chain.

2. Observe the performance of the agent chain under various operational contexts and collect data on the key performance indicators.

3. Use the collected data to train the reinforcement learning model, updating the policy to maximize the value function $V$.

4. Apply the updated policy to adjust the weightings of performance metrics in real-time, ensuring optimal performance of the agent chain.

Below description illustrates an interconnected Role of PMO with the system 100.

1. Integration with Dynamic NLP Tuner: The PMO provides a pivotal service to the Dynamic NLP tuner by optimizing the performance metrics that are critical to the DNT's real-time language processing and adaptation capabilities. The PMO dynamically tunes metrics such as latency, throughput, and accuracy, which directly affect the NLP aspect's efficiency and effectiveness in processing language data and adapting to new tasks. For instance, if the PMO determines that the accuracy metric should be weighted more heavily due to a complex task requirement, the Dynamic NLP tuner adjust its parameters to align with this directive, possibly at the expense of processing speed, to ensure the highest quality of language understanding.

2. Integration with Model Repository Analytics Engine (MRAE): The PMO influences the MRAE by adjusting the weightings of performance metrics that determine how AI agents are selected and maintained within the repository. The PMO's optimization decisions guide the MRAE to prioritize certain model characteristics, such as interpretability or speed, depending on the current operational needs identified by the PMO. As an example, in scenarios where interpretability becomes a crucial metric (perhaps due to regulatory requirements), the PMO adjust its weightings to reflect this priority, and the MRAE responds by favoring AI agents with higher interpretability scores for inclusion in the repository.

3. Integration with Adaptive Model Matching System (AMMS): The AMMS utilizes the PMO's outputs to refine its AI agent matching algorithms/technique(s). By receiving optimized metric weightings from the PMO, the AMMS can more accurately determine the suitability of AI agents for specific tasks, thus ensuring an optimal fit between task requirements and AI agent's capabilities. For example, if the PMO's reinforced learning algorithms predicts a shift in the importance of certain task performance metrics, the AMMS uses this information to adjust its matching criteria. If resource efficiency becomes a critical need, the AMMS prioritizes matching tasks with models that are optimized for lower resource consumption.

4. Outcome impact across the above units/modules of the system 100: The outcome of the PMO's multi-objective optimization and reinforcement learning algorithms is a set of dynamically tuned performance metrics that directly impacts the functioning of the DNT, the MRAE, and the AMMS. The PMO ensures that the entire agent chain within the Blackbox Optimizer (e.g., the system 100) operates under the most optimal conditions by continuously balancing and re-balancing performance metrics to adapt to the evolving operational context.

Thus, the system 100 core aspect lies in the PMO's ability to provide a centralized, dynamic optimization framework that influences the performance of multiple, interrelated AI modules within an autonomous system. In essence, the PMO acts as the central nervous system, thereby receiving signals (performance data) from various components (DNT, MRAE, AMMS), processing this information to optimize performance metrics, and sending instructions back to these components to adapt their operations accordingly.

The above step of optimizing and the description may be better understood by way of examples illustrated below: PMO Optimization Actions and Results:

1. **Reducing Response Time:**

   a. **Before:** Agents had an average response time of 5 minutes per query.
   b. **PMO action:** Analyzes historical response data, optimizes query handling algorithms.
   c. **After:** Response time reduced to 3 minutes per query, leading to quicker customer service.

2. **Improving Accuracy of Responses:**

   a. **Before:** AI Agents had a 75% accuracy rate in providing correct information.
   b. **PMO Action:** Implements feedback loops, refines NLP models for better understanding of queries.
   c. **After:** Accuracy rate increases to 85%, resulting in more reliable customer service.

3. **Enhancing Customer Satisfaction:**

   a. **Before:** Customer satisfaction scores averaged at 70%.
   b. **PMO Action:** Balances speed and accuracy optimizations, introduces personalized response templates.
   c. **After:** Customer satisfaction scores rise to 82%, indicating higher overall service quality.

4. **Optimizing Resource Utilization:**

   a. **Before:** High computational resources were used, leading to increased operational costs.
   b. **PMO Action:** Streamlines AI models, optimizes data processing pipelines.
   c. **After:** Resource utilization decreases by 20%, reducing costs while maintaining performance.

5. **Adapting to Peak Hours:**

   a. **Before:** Performance dips during peak hours with increased query volumes.
   b. **PMO Action:** Introduces dynamic resource allocation during peak hours.
   c. **After:** Consistent performance maintained throughout the day, including peak hours.

6. **Customized Optimization for specific AI Agent types:**

   a. **Before:** One-size-fits-all approach to all agents.
   b. **PMO Action:** Customizes optimization strategies based on the specific type of queries handled by each agent.
   c. **After:** Specialized agents handle complex queries more efficiently, while general agents manage simpler queries faster.

7. **Continuous Improvement:**

a. **Ongoing:** PMO continuously monitors performance metrics and adjusts optimization strategies based on real-time data and feedback.

The BBO system 100 comprises distinct but interconnected units as depicted in FIG. 2, - each with a specialized function contributing to the overall optimization of AI agent chains. This modular approach facilitates maintenance, scalability, and future enhancements. Further, the DNT of the system utilizes state-of-the-art transformer-based models, thus enabling sophisticated natural language processing that can dynamically adapt to new tasks through transfer and few-shot learning. The ACGM is implemented within the DNT that allows for the dynamic control of contextual information flow, enabling real-time adjustments to the model's focus based on task complexity, which is a significant departure from static gating mechanisms. The DEO of the system 100 iteratively refines the embedding space of encoded inputs, thus allowing the DNT to rapidly align with new domains or tasks without extensive retraining, offering a substantial improvement in efficiency. The CMA technique is implemented to enable rapid adaptation to new tasks using minimal training examples, which is a critical advancement that leverages meta-learning principles to update the AI agent's internal state for task-specific adjustments. Further, the system 100 and method of the present disclosure also implement MRAE that maintains a repository of up-to-date AI agents and employs real-time performance tracking and interpretability assessments to enhance model selection. Furthermore, the IAF is employed by the system 100 within the MRAE that quantitatively assesses and aggregates the interpretability of AI agents, synthesizing insights from various XAI techniques, which is critical for maintaining transparent and accountable AI operations. Moreover, the system 100 implements AMMS that leverages the latest comparison metrics, including those derived from zero-shot learning, to accurately match AI agents to structured tasks, thereby significantly improving the precision of model-task compatibility evaluations. The PMO is then executed by the system 100 that uses advanced multi-objective optimization techniques and reinforcement learning to dynamically balance and adapt performance metrics according to diverse operational contexts, thereby enhancing the AI agent chains' efficiency and effectiveness. Unlike traditional systems that operate with predefined agent roles, the AI agent chain creation and integration is performed by the system 100 by dynamically generating and integrating task-specific agents into chains, thus optimizing for the specific operational needs. The system 100 is configured to learn continuously from real-time feedback, thus allowing each of the units mentioned in FIGS. 2 and 3 of the system 100 to evolve and adapt its strategies, thereby ensuring ongoing optimization of the AI agent chains. Lastly, by incorporating feedback mechanisms, the system 100 self-adjusts, and continuously improves its algorithms and AI agents, thus leading to an ever-improving optimization process. The above advancements of the system 100 and the method of the present disclosure demonstrate the system 100 is not only capable of autonomous self-improvement but also one that can adapt in real-time to the evolving needs of complex AI operations. It represents a significant step forward in the field of AI optimization technologies, thus offering a comprehensive solution for enhancing the performance of AI agent chains.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1.  A processor implemented method comprising:

    receiving, via one or more hardware processors, natural language processing (NLP) data and one or more structured tasks to be performed (202);
    generating, by using a Dynamic NLP tuner via the one or more hardware processors, one or more task specific artificial intelligence (AI) agents based on a nature of the NLP data, and an associated context of the one or more structured tasks (204);
    evaluating and selecting, by using a model repository analytics engine (MRAE) via the one or more hardware processors, at least a subset of the one or more task specific AI agents based on a performance trend and suitability of the one or more structured tasks (206), wherein the evaluation and selection of at least the subset of the one or more task specific AI agents is based on an associated aggregated interpretability score;
    mapping, by using an adaptive model matching system (AMMS) via the one or more hardware processors, at least the subset of the one or more task specific AI agents to a corresponding structured task amongst the one or more structured tasks based on the associated aggregated interpretability score and by applying one or more meta-learning techniques to each of the one or more selected AI task specific AI agents, to obtain a chain of task specific mapped AI agents (208); and
    optimizing, by using a performance metrics optimizer (PMO) via the one or more hardware processors, performance of at least the subset of the one or more task specific mapped AI agents performing the corresponding structured task based on a dynamic prediction of an effectiveness of one or more associated metric weightings, to obtain an optimized chain of task specific mapped AI agents (210).

2.  The processor implemented method as claimed in claim 1, wherein the step of generating the one or more task specific AI agents comprises:

    transforming, by using an encoder of an Adaptive Context Gating Mechanism (ACGM) via the one or more hardware processors, the NLP data into an encoded contextual intermediate representation; and
    modulating, by the ACGM via the one or more hardware processors, the encoded contextual intermediate representation based on complexity of the one or more structured tasks to obtain the one or more task specific AI agents.

3.  The processor implemented method as claimed in claim 2,

    wherein the encoded contextual intermediate representation is modulated based on an adaptability layer introduced in the NLP data and an adjustment of one or more gating parameters of the ACGM, and wherein the one or more gating parameters of the ACGM are adjusted based on one or more factors further comprising at least one of the nature of the NLP data, the context of the one or more tasks, and a feedback from one or more preceding outcomes.

4. The processor implemented method as claimed in claim 1, wherein an embedding space of the encoded contextual intermediate representation is iteratively adjusted with the one or more structured tasks, by using a Dynamic Embedding Optimizer (DEO).

5. The processor implemented method as claimed in claim 1, wherein one or more internal states of the one or more task specific AI agents are updated based on at least one of (i) performance of the one or more task specific AI agents, and (ii) feedback associated with the embedding space of the one or more task specific AI agents.

6. The processor implemented method as claimed in claim 1, wherein the associated aggregated interpretability score is obtained by:

generating, by using the performance metrics optimizer, one or more performance metrics for the one or more task specific AI agents based on the corresponding structured task being performed; and obtaining the associated aggregated interpretability score for the one or more task specific AI agents based on the one or more performance metrics.

7. The processor implemented method as claimed in claim 6, further comprising dynamically tuning one or more performance metrics of at least the subset of the one or more task specific AI agents based on an associated complexity of the one or more structured tasks being performed, and wherein the one or more performance metrics comprise at least one of latency, throughput, and accuracy of the one or more task specific AI agents.

8. A system (100), comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions to:

receive natural language processing (NLP) data and one or more structured tasks to be performed;
generate, by using a Dynamic NLP tuner, one or more task specific artificial intelligence (AI) agents based on a nature of the NLP data, and an associated context of the one or more structured tasks;
evaluate and select, by using a model repository analytics engine (MRAE), at least a subset of the one or more task specific AI agents based on a performance trend and suitability of the one or more structured tasks, wherein the evaluation and selection of at least the subset of the one or more task specific AI agents is based on an associated aggregated interpretability score;
map, by using an adaptive model matching system (AMMS), at least the subset of the one or more task specific AI agents to a corresponding structured task amongst the one or more structured tasks based on the associated aggregated interpretability score and by applying one or more meta-learning techniques to each of the one or more selected AI task specific AI agents, to obtain a chain of task specific mapped AI agents; and
optimize, by using a performance metrics optimizer (PMO), performance of the at least the subset of the one or more task specific mapped AI agents performing the corresponding structured task based on a dynamic prediction of an effectiveness of one or more associated metric weightings, to obtain an optimized chain of task specific mapped AI agents.

9. The system as claimed in claim 8, wherein the one or more task specific AI agents are generated by:

transforming, by using an encoder of an Adaptive Context Gating Mechanism (ACGM), the NLP data into an encoded contextual intermediate representation; and
modulating, by the ACGM, the encoded contextual intermediate representation based on complexity of the one or more structured tasks to obtain the one or more task specific AI agents.

10. The system as claimed in claim 9,

wherein the encoded contextual intermediate representation is modulated based on an adaptability layer introduced in the NLP data and an adjustment of one or more gating parameters of the ACGM, and
wherein the one or more gating parameters of the ACGM are adjusted based on one or more factors further comprising at least one of the nature of the NLP data, the context of the one or more tasks, and a feedback from one or more preceding outcomes.

11. The system as claimed in claim 8, wherein an embedding space of the encoded contextual intermediate representation is iteratively adjusted with the one or more structured tasks, by using a Dynamic Embedding Optimizer (DEO).

12. The system as claimed in claim 8, wherein one or more internal states of the one or more task specific AI agents are updated based on at least one of (i) performance of the one or more task specific AI agents, and (ii) feedback associated with the embedding space of the one or more task specific AI agents.

13. The system as claimed in claim 8, wherein the associated aggregated interpretability score is obtained by:

generating, by using the performance metrics optimizer, one or more performance metrics for the one or more task specific AI agents based on the corresponding structured task being performed; and
obtaining the associated aggregated interpretability score for the one or more task specific AI agents based on the one or more performance metrics.

14. The system as claimed in claim 8, wherein the one or more hardware processors are further configured by the instructions to dynamically tune one or more performance metrics of at least the subset of the one or more task specific AI agents based on an associated complexity of the one or more structured tasks being performed, and wherein the one or more performance metrics comprise at least one of latency, throughput, and accuracy of the one or more task specific AI agents.

15. One or more non-transitory machine-readable information storage mediums comprising one or more instructions which when executed by one or more hardware processors cause:

receiving natural language processing (NLP) data and one or more structured tasks to be performed;
generating, by using a Dynamic NLP tuner, one or more task specific artificial intelligence (AI) agents based on a nature of the NLP data, and an associated context of the one or more structured tasks;
evaluating and selecting, by using a model repository analytics engine (MRAE), at least a subset of the one or more task specific AI agents based on a performance trend and suitability of the one or more structured tasks , wherein the evaluation and selection of at least the subset of the one or more task specific AI agents is based on an associated aggregated interpretability score;
mapping, by using an adaptive model matching system (AMMS), at least the subset of the one or more task specific AI agents to a corresponding structured task amongst the one or more structured tasks based on the associated aggregated interpretability score and by applying one or more meta-learning techniques to each of the one or more selected AI task specific AI agents, to obtain a chain of task specific mapped AI agents; and
optimizing, by using a performance metrics optimizer (PMO), performance of at least the subset of the one or more task specific mapped AI agents performing the corresponding structured task based on a dynamic prediction of an effectiveness of one or more associated metric weightings, to obtain an optimized chain of task specific mapped AI agents.

SYSTEM
100

MEMORY
102

DATABASE
108

HARDWARE PROCESSOR(S)
104

INTERFACE(S)
106

**FIG. 1**

SYSTEM 100

| | |
|---|---|
| Dynamic natural language processing (NLP) tuner (DNT) | Model repository analytics engine (MRAE) |
| Adaptive model matching system (AMMS) | Performance metrics optimizer (PMO) |

**FIG. 2**

| | |
|---|---|
| receiving, via one or more hardware processors, natural language processing (NLP) data and one or more structured tasks to be performed | 202 |

↓

| | |
|---|---|
| generating, by using a Dynamic NLP tuner via the one or more hardware processors, one or more task specific artificial intelligence (AI) agents based on a nature of the NLP data, and an associated context of the one or more structured tasks | 204 |

↓

| | |
|---|---|
| evaluating and selecting, by using a model repository analytics engine (MRAE) via the one or more hardware processors, at least a subset of the one or more task specific AI agents based on a performance trend and suitability of the one or more structured tasks, wherein the evaluation and selection of at least the subset of the one or more task specific AI agents is based on an associated aggregated interpretability score | 206 |

↓

| | |
|---|---|
| mapping, by using an adaptive model matching system (AMMS) via the one or more hardware processors, at least the subset of the one or more task specific AI agents to a corresponding structured task amongst the one or more structured tasks based on the associated aggregated interpretability score and by applying one or more meta-learning techniques to each of the one or more selected AI task specific AI agents, to obtain a chain of task specific mapped AI agents | 208 |

↓

| | |
|---|---|
| optimizing, by using a performance metrics optimizer (PMO) via the one or more hardware processors, performance of at least the subset of the one or more task specific mapped AI agents performing the corresponding structured task based on a dynamic prediction of an effectiveness of one or more associated metric weightings, to obtain an optimized chain of task specific mapped AI agents | 210 |

**FIG. 3**

Europäisches
Patentamt

European
Patent Office

Office européen
des brevets

# EUROPEAN SEARCH REPORT

**Application Number**

EP 24 21 8912

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/135179 A1 (MIELKE SEBASTIAN JONATHAN [US] ET AL) 4 May 2023 (2023-05-04) * the whole document * ----- | 1-15 | INV. G06N3/092 G06N3/096 G06N3/0455 G06N3/0985 G06F16/9032 |

**TECHNICAL FIELDS
SEARCHED      (IPC)**

G06N
G06F

The present search report has been drawn up for all claims

| Place of search | Date of completion of the search | Examiner |
|---|---|---|
| The Hague | 27 March 2025 | Ntarlagiannis, V |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 21 8912

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2025

| Patent document cited in search report | Publication date | Patent family member(s) | Publication date |
|---|---|---|---|
| US 2023135179 A1 | 04-05-2023 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• IN 202321087109